# FASCICULE DE BREVET EUROPEEN

(11) **EP 0 950 306 B1**
(45) Date de publication et mention de la délivrance du brevet: **20.07.2005**
(21) Numéro de dépôt: 97953982.2
(22) Date de dépôt: 30.12.1997
(51) Int. Cl.: H04L 27/26

(54) **PROCEDE ET DISPOSITIF DE MISE EN FORME D'UN BRUIT D'ECRETAGE D'UNE MODULATION MULTIPORTEUSE**
VERFAHREN UND VORRICHTUNG ZUM FORMEN DES BESCHNEIDUNGSRAUSCHENS EINER MEHRTRÄGERMODULATION
METHOD AND DEVICE FOR FORMATTING A CLIPPING NOISE IN A MULTICARRIER MODULATION

(30) Priorité: 31.12.1996 FR 9616379
(43) Date de publication de la demande: 20.10.1999
(73) Titulaire: STMicroelectronics S.A., 92120 Montrouge (FR)
(72) Inventeur: MESTDAGH, Denis, J., G., F-38190 Bernin (FR)
(74) Mandataire: de Beaumont, Michel
(86) Numéro de dépôt international: PCT/FR1997/002465
(87) Numéro de publication internationale: WO 1998/029996

(56) Documents cités:
- MESTDAGH D J G ET AL: "ANALYSIS OF CLIPPING EFFECT IN DMT-BASED ADSL SYSTEMS" IEEE INTERNATIONAL CONFERENCE ON COMMUNICATIONS. SUPERCOMM, vol. 1, 1 mai 1994, pages 293-300, XP000515605
- O'NEILL R ET AL: "PERFORMANCE OF AMPLITUDE LIMITED MULTITONE SIGNALS" PROCEEDINGS OF THE VEHICULAR TECHNOLOGY CONFERENCE, STOCKHOLM, JUNE 8 - 10, 1994, vol. 3, 8 juin 1994, INSTITUTE OF ELECTRICAL AND ELECTRONICS ENGINEERS, pages 1675-1679, XP000497707
- WULICH: "Peak Factor In Orthogonal Multicarrier Modulation With Variable Levels" ELECTRONICS LETTERS, vol. 32, no. 20, 26 septembre 1996, pages 1859-1861, XP002042110

## Description

La présente invention concerne le domaine des transmissions en modulation multiporteuse (DMT) et, plus particulièrement, la transmission de signaux codés par multiplexage orthogonal dans le domaine fréquentiel (COFDM : Coded Orthogonal Frequency Division Multiplexing).

La transmission, en modulation multiporteuse de signaux codés par multiplexage fréquentiel orthogonal, est une technique relativement récente qui présente un intérêt dans de nombreuses applications par rapport aux autres techniques classiquement employées.

Une première application concerne les réseaux téléphoniques filaires. En utilisant une transmission DMT/COFDM sur une ligne d'utilisateur numérique et asymétrique (ADSL), on dispose de canaux à débit très élevé dans lesquels peuvent circuler à la fois des signaux vocaux et des signaux numériques, par exemple, de vidéo comprimée. A titre d'exemple, le débit d'une telle transmission peut être de 10 Mbits/s dans un sens et de 640 kbits/s dans l'autre sens. A titre de comparaison, un modem fonctionnant selon la norme V34bis qui constitue un des modems les plus rapides actuellement utilisés autorise un débit de 33,6 kbits/s dans les deux sens.

Un deuxième exemple d'application concerne la diffusion audionumérique depuis un satellite ou depuis un émetteur terrestre vers un mobile, par exemple un véhicule. La transmission DMT/COFDM permet ici, par exemple, une transmission d'informations à un débit de l'ordre de 1,7 Mbits/s.

Un troisième exemple d'application concerne la diffusion terrestre de signaux de télévision numérique (DTTB) pour laquelle on perd actuellement 1/9 de la capacité des fréquences disponibles à cause des zones de recouvrement nécessaires entre les différents émetteurs. La mise en oeuvre d'une transmission DMT/COFDM permet qu'un canal donné soit transmis sur une même fréquence quel que soit l'émetteur.

Un signal DMT est constitué de la superposition de n porteuses modulées indépendamment les unes des autres. Les porteuses sont modulées, par exemple, par une modulation d'amplitude en quadrature (QAM) ou par une modulation par sauts de phase (MPSK).

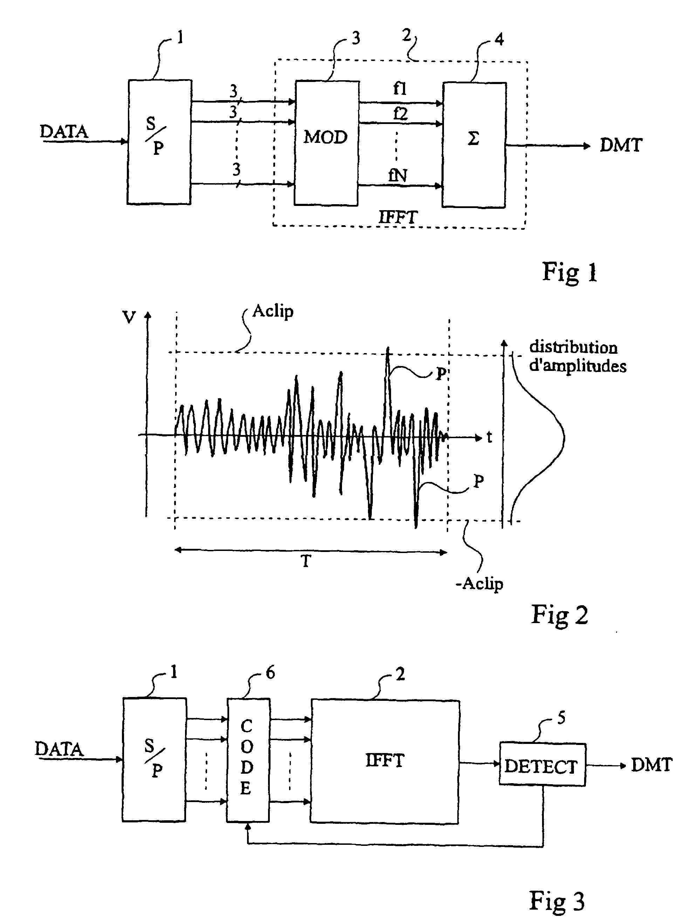

La figure 1 représente, de façon très schématique, un exemple classique de circuit effectuant une modulation multiporteuse.

Un flux de données DATA arrive en série sur un convertisseur 1 série-parallèle (S/P) dont les sorties sont envoyées sur un circuit 2 destiné à générer des symboles DMT au moyen d'une transformation rapide de Fourier inverse (IFFT). D'un point de vue fonctionnel, le circuit 2 est constitué d'un modulateur QAM ou MPSK utilisant plusieurs porteuses f1, f2, ... fn, qui délivre les porteuses modulées à un sommateur (Σ)4 superposant les échantillons successifs de ces porteuses pour générer les symboles DMT. Généralement, chaque porteuse est associée à un paquet de données, c'est-à-dire que le flux DATA est envoyé en parallèle au modulateur (MOD) 3 en regroupant les bits de données par paquets de même taille. Par exemple, chaque porteuse est associée à un groupe de 3 bits transmis en modulation 8-QAM pour reproduire les huit états possibles de la combinaison des 3 bits de données. Dans cet exemple, si 256 porteuses sont utilisées (n = 256), un symbole DMT contient 768 bits, et le débit de transmission est de 758/T bits/s, où T représente la durée d'un symbole DMT.

La figure 2 illustre un exemple de symbole DMT correspondant à la superposition d'un échantillon de toutes les porteuses modulées.

Un problème qui se pose dans la modulation multiporteuse est que la sommation des échantillons de porteuses modulées peut conduire, de façon aléatoire, à des pics p d'amplitude très importante quand plusieurs porteuses modulées se superposent en phase. Ces pics ont des conséquences importantes sur la partie analogique du circuit, en particulier, sur la complexité et la faisabilité de convertisseurs numérique-analogique (côté émetteur) et analogique-numérique (côté récepteur), les pics pouvant classiquement atteindre une vingtaine de volts d'amplitude crête.

Pour résoudre ce problème, le signal DMT numérique est généralement écrêté de sorte que son amplitude maximale en valeur absolue n'excède jamais une valeur prédéterminée Aclip. La valeur Aclip est généralement choisie en fonction d'un seuil de probabilité d'apparition d'un pic pour une application donnée. En effet, l'application d'une transformation de Fourier rapide inverse conduit à une distribution d'amplitude ayant la forme d'une courbe de Gauss schématisée sur la partie droite de la figure 2. La valeur Aclip est donc généralement choisie en fonction du circuit d'émission analogique et du convertisseur numérique-analogique utilisé pour respecter un certain taux d'erreurs, c'est-à-dire une certaine probabilité d'écrétage des symboles, afin de minimiser les pertes de signal. Par exemple, pour une transmission DMT appliquée à une ligne d'utilisateur numérique et asymétrique, les normes fixent une probabilité inférieure à 10⁻⁷.

L'écrétage du signal numérique DMT introduit un bruit d'écrêtage (généralement désigné par son appellation anglosaxonne "clipping noise") qui nuit aux performances (rapport signal/bruit) du système de communication. En particulier, le rapport signal/bruit conditionne le débit possible dans la mesure où il conditionne l'écart qui doit être prévu, dans le diagramme de phases de chaque porteuse, entre deux points de réception. Plus le rapport signal/bruit est bon, plus le nombre de combinaisons de bits contenues dans un échantillon d'une porteuse peut être élevé en augmentant la longueur des paquets de bits associés à chaque porteuse.

Une première solution classique pour améliorer le rapport signal/bruit est illustrée par la figure 3. Cette solution consiste à prévoir, en sortie du circuit IFFT 2, un détecteur (DETECT) 5 de présence d'un symbole DMT écrêté pour commander un circuit (CODE) 6 de recodage des données concernées, intercalé entre le paralléliseur 1 et le circuit 2. Le rôle du circuit 6 est de modifier le codage des données, selon une loi connue du récepteur des symboles envoyés, pour retransmettre un symbole DMT, écrêté lors d'une première passe, en un symbole non écrêté. En effet, une modification du codage conduit à une modification des phases des porteuses modulées et la probabilité pour qu'un symbole DMT présente des pics pour deux codages différents est extrêmement faible.

Un inconvénient d'une telle solution est qu'elle nécessite de mémoriser, en amont du paralléliseur 1, les données à transmettre pour permettre leur réémission si un symbole DMT écrêté est détecté après codage. Un autre inconvénient de cette solution est que le circuit doit transmettre, outre au moins un deuxième symbole DMT si le premier a été écrêté, un code pour indiquer au récepteur le nombre de passes d'un même symbole DMT envoyé. De plus, cette solution requiert un circuit IFFT plus rapide pour que la deuxième transformation éventuelle intervienne avant la modulation du symbole suivant et/ou une mémoire supplémentaire pour conserver les symboles en amont du circuit.

Cette première solution est décrite dans un article intitulé "A method to reduce the probability of clipping in DMT-based transceivers" de D. Mestdagh et P. Spruyt paru dans IEEE Transactions on Communications, octobre 1996, volume 14, numéro 10, pages 1234-1238.

Une deuxième solution consiste à modifier le codage, en entrée du circuit 2, pour les combinaisons de bits qui sont susceptibles de donner les pics les plus élevés. En effet, on a constaté que pour toutes les combinaisons, il existe un niveau d'amplitude de pic pour le cas où les porteuses deviennent en phase. Une telle solution est décrite, par exemple, dans un article intitulé "Block coding scheme for reduction of peak to mean envelope power ratio of multicarrier transmission schemes" de A.E. Johns, T.A. Wilkinson et S.K. Barton paru dans Electronics Letters, décembre 1994, volume 30, numéro 25, pages 2098 et 2099, et dans un article intitulé "Simple coding scheme to reduce peak factor in QPSK multicarrier modulation" de S.J. Shepherd et al. paru dans Electronics Letters, juillet 1995, volume 31, n°14, pages 1131 et 1132.

Si cette deuxième solution ne nécessite pas une double transmission d'un même symbole DMT, elle impose toujours de transmettre des bits supplémentaires associés au codage. De plus, cette solution nécessite une vitesse de traitement de données élevée pour effectuer le codage supplémentaire, donc une diminution de l'énergie par bit pour la même puissance de transmission globale, ce qui conduit à une dégradation des performances du système de communication en terme de capacité de maintien d'informations. En outre, cette solution concerne uniquement les signaux DMT dans lesquels les porteuses sont modulées en MPSK.

La présente invention vise à proposer une nouvelle solution pour améliorer le rapport signal/bruit d'un signal transmis en modulation multiporteuse qui pallie les inconvénients des solutions classiques.

La présente invention vise également à proposer une nouvelle solution qui ne nuise pas au débit utile de la transmission.

La présente invention vise également à proposer une solution indépendante du type de modulation utilisé.

Pour atteindre ces objets, la présente invention prévoit un procédé de mise en forme d'un signal en modulation multiporteuse, consistant à écrêter le signal, en amplitude, par rapport à une valeur seuil ; et à réinjecter, avec retard et sur le signal à mettre en forme, un bruit d'écrêtage redistribué, au moins en partie, hors de la bande de fréquences utile du signal en modulation multiporteuse.

Selon un mode de réalisation de la présente invention, l'opération d'écrêtage est effectuée sur le signal à mettre en forme, après réinjection éventuelle, sur le signal en modulation multiporteuse, d'un bruit d'écrêtage correspondant à un écrêtage antérieur.

Selon un mode de réalisation de la présente invention, l'étape d'écrétage consiste à détecter, dans une première réplique du signal à mettre en forme, la présence éventuelle d'un pic dont l'amplitude absolue est supérieure à la valeur seuil ; soustraire, d'une deuxième réplique du signal à mettre en forme, la valeur seuil pour en extraire le bruit d'écrêtage correspondant à une portion du pic excédant la valeur seuil ; et soustraire du signal à mettre en forme, retardé d'un temps correspondant au temps nécessaire à la détection de la présence éventuelle d'un pic majoré du temps nécessaire à l'extraction du bruit d'écrêtage sur la deuxième réplique, le bruit d'écrêtage.

Selon un mode de réalisation de la présente invention, l'étape de réinjection consiste à redistribuer le bruit d'écrêtage au moyen d'un filtre linéaire ; et à ajouter le bruit redistribué au signal en modulation multiporteuse à mettre en forme.

Selon un mode de réalisation de la présente invention, le signal à mettre en forme est un signal numérique.

Selon un mode de réalisation de la présente invention, le signal à mettre en forme est un signal analogique.

La présente invention vise aussi un dispositif de mise en forme d'un signal en modulation multiporteuse, comportant un moyen pour écrêter le signal à mettre en forme par rapport à une valeur seuil ; un moyen pour redistribuer, hors de la bande de fréquences utile du signal en modulation multiporteuse, un bruit d'écrêtage ; et un moyen pour réinjecter, avec retard et sur le signal en modulation multiporteuse, un bruit redistribué.

Selon un mode de réalisation de la présente invention, le moyen de redistribution est un filtre linéaire.

Selon un mode de réalisation de la présente invention, le dispositif comporte un moyen, pour retarder le signal à mettre en forme préalablement à son écrêtage, d'une durée correspondant à la durée de propagation d'une réplique de ce signal dans un détecteur de pic et dans un circuit d'extraction d'un bruit d'écrêtage éventuel.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 décrites précédemment sont destinées à exposer l'état de la technique et le problème posé ;
la figure 4 représente un schéma fonctionnel d'un dispositif de mise en forme d'un signal en modulation multiporteuse selon un mode de réalisation de la présente invention ; et
les figures 5 à 8 illustrent le fonctionnement d'un dispositif de mise en forme selon l'invention.

Les mêmes éléments ont été désignês par les mêmes références aux différentes figures. Pour des raisons de clarté, seuls les éléments qui sont nécessaires à la compréhension de l'invention ont été représentés aux figures et seront décrits par la suite.

Une caractéristique de la présente invention est, à l'inverse de toutes les solutions connues qui modifient les symboles DMT pour supprimer l'apparition de pics à écrêter, de transmettre des symboles écrétés.

Selon l'invention, on redistribue le bruit d'écrêtage d'une façon particulière qui consiste à rejeter tout ou partie de ce bruit hors de la bande de fréquences du signal utile, à réinjecter le bruit redistribué sur les symboles à traiter. Par la redistribution du bruit, cette réinjection s'effectue avec retard par rapport au pic écrêté. On tire profit du fait que la densité spectrale de bruit d'écrêtage correspond à une densité de bruit "blanc gaussien" (AWGN). Cela est dû au fait que, de façon temporelle, l'apparition d'un bruit d'écrêtage est aléatoire et impulsionnelle. Ainsi, la densité spectrale (transformée de Fourier) du bruit d'écrêtage correspond à une constante.

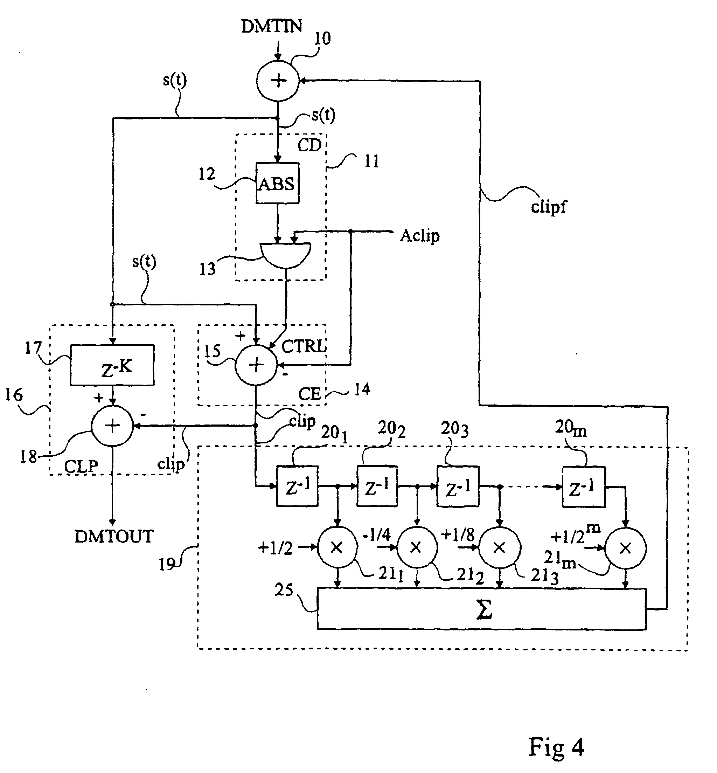

La figure 4 représente, par un schéma fonctionnel, un mode de réalisation d'un dispositif de mise en forme de signal selon la présente invention. Ce dispositif est destiné à être placé en aval d'un circuit (2, figure 1) générant des symboles DMT par transformation de Fourier rapide inverse.

Les symboles numériques DMT issus du circuit de modulation multiporteuse arrivent sur une première entrée (DMTin) d'un additionneur 10 dont une deuxième entrée reçoit un signal de bruit redistribué clipf, obtenu par la mise en oeuvre de la présente invention comme on le verra par la suite. Une sortie du sommateur 10 délivre un signal s(t) qui correspond au signal DMTin auquel est ajouté le bruit éventuel clipf correspondant à l'écrêtage d'un pic présent antérieurement dans le signal DMTin. Le signal s(t) est envoyé sur un détecteur (CD) 11 d'amplitude. Le rôle du détecteur 11 est de détecter un besoin d'écrêter le signal s(t) lorsque son amplitude absolue dépasse une valeur seuil Aclip. Le détecteur 11 comporte, par exemple, un circuit 12 de valeur absolue recevant une réplique du signal s(t) et délivrant la valeur absolue de ce signal. La sortie du circuit 12 est envoyée sur une première entrée d'un comparateur 13 dont une seconde entrée reçoit le niveau de seuil d'écrêtage Aclip. La sortie du comparateur 13 délivre un signal de commande CTRL à un circuit 14 chargé d'extraire le bruit d'écrêtage du signal s(t). Le circuit 14 constitue fonctionnellement un additionneur 15 dont une entrée positive reçoit une réplique du signal s(t) et dont une entrée négative reçoit le signal continu Aclip. L'additionneur 15 est commandé par le signal d'état CTRL. Le circuit 14 délivre le bruit clip extrait du signal s(t). Le signal clip est un signal impulsionnel présentant une impulsion à chaque fois que le signal s(t) est, en amplitude absolue, supérieur au seuil Aclip.

Le signal s(t) et le signal clip sont envoyés à un circuit (CLP) 16 d'écrétage qui retire du signal s(t), le bruit clip extrait par le circuit 14. Le circuit 16 comporte, fonctionnellement, un élément retardateur 17 (Z^{-k}) dont le rôle est d'apporter au signal s(t) un retard correspondant au délai de propagation dans les circuits 11 de détection de seuil d'amplitude et 14 d'extraction de bruit, et un additionneur 18 recevant la sortie de l'élément 17 sur une entrée positive et le signal clip sur une entrée négative. Une sortie de l'additionneur 18 constitue le signal de sortie DMTout du dispositif de mise en forme selon l'invention.

Le signal clip issu du circuit 14 est également envoyé sur un filtre 19 dont le rôle est, selon l'invention, de reporter le bruit clip vers des fréquences situées hors de la bande utile du signal DMTin. Le filtre 19 est un filtre classique, et sa constitution est parfaitement connue. Il pourra s'agir, par exemple, d'un filtre numérique à répohse impulsionnelle finie (FIR) constitué de plusieurs éléments de retard (Z⁻¹) 20 associés en série, chaque élément 20 recevant la sortie de l'élément précédent. Un premier élément 20₁ reçoit le signal clip. La sortie de l'élément 20₁ est également envoyée sur un premier multiplieur 21₁ par un facteur 1/2. La sortie d'un deuxième élément 20₂ est également envoyée sur un deuxième multiplieur 21₂ par un facteur -1/4. La sortie d'un troisième élément 20₃ est également envoyée sur un troisième multiplieur 21₃ par un facteur +1/8. Et ainsi de suite, jusqu'à un m^{ième} élément 20ₘ dont la sortie est envoyée sur un m^{ième} multiplieur 21ₘ par un coefficient +1/2^{m}. Les sorties des multiplieurs 21 sont envoyées sur des entrées d'un sommateur (Σ) 25 dont une sortie délivre le signal clipf envoyé sur une des entrées de l'additionneur 10.

La fonction de transfert du filtre 19 est optimisée en fonction de l'application. En particulier, le filtre devra réduire autant que possible la portion de bruit d'écrêtage qui se situe dans la bande de fréquences du signal utile, ou encore supprimer tout bruit d'écrêtage dans la bande utile.

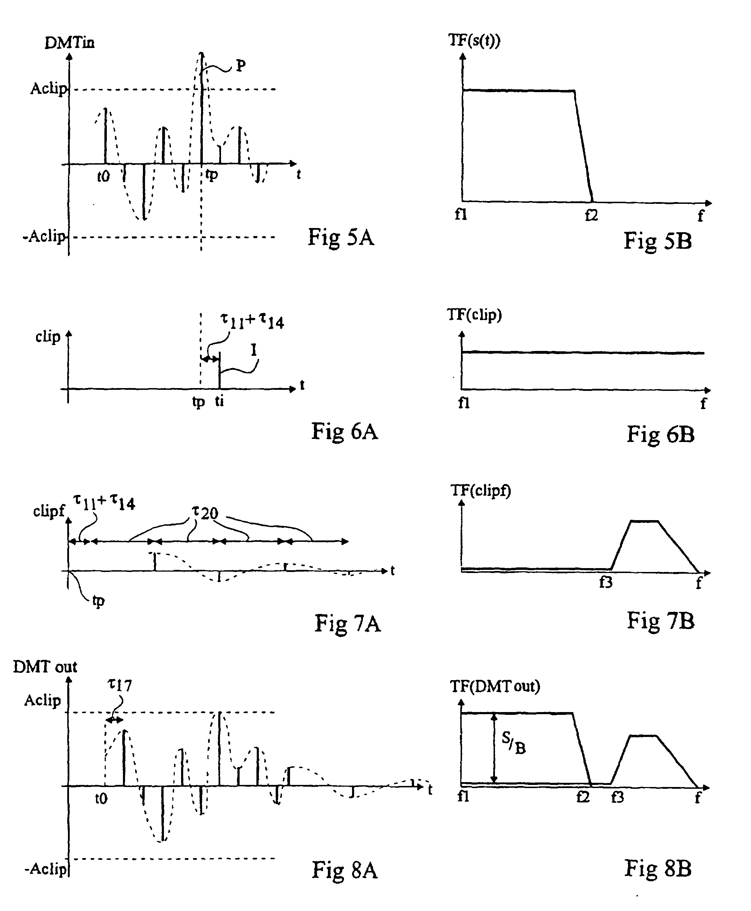

Le fonctionnement d'un dispositif de mise en forme de signal tel que représenté à la figure 4 sera décrit par la suite en relation avec les figures 5 à 8. Les figures 5A, 6A, 7A, 8A représentent, sous forme temporelle, des exemples de signaux caractéristiques du circuit représenté à la figure 4. Les figures 5B, 6B, 7B et 8B représentent les densités spectrales, c'est-à-dire les transformées de Fourier respectives, des signaux représentés aux figures 5A, 6A, 7A et 8A.

On suppose que le dispositif représenté à la figure 4 traite des échantillons numériques du signal DMTin. On notera toutefois que le circuit de la figure 4 peut être réalisé sous forme de circuit de traitement analogique.

La figure 5A représente un exemple de symbole DMTin introduit dans le dispositif selon l'invention. Ce symbole débute, par exemple, à un instant t0 et, à un instant tp, présente un pic p dont l'amplitude absolue est supérieure au seuil Aclip. La figure 5B représente la densité spectrale d'un symbole DMT. On suppose qu'aucun bruit d'écrêtage ne s'est trouvé redistribué dans le symbole DMT de la figure 5A par suite de la présence d'un pic dans un symbole précédent. Ainsi, le signal s(t) correspond au signal DMTin et sa transformée de Fourier TF[s(t)] ne contient pas de bruit autre que le bruit de quantification. On suppose que la bande utile du signal est comprise entre des fréquences f1 et f2.

La figure 6A représente le signal clip en sortie du circuit 14. Ce signal présente une impulsion I à un instant ti retardé des temps de propagation respectifs τ₁₁ et τ₁₄ dans les circuits 11 et 14 par rapport à l'instant tp. La densité spectrale de bruit (TF(clip), figure 6B) est constante sur tout le domaine fréquentiel dans la mesure où les bruits I extraits du signal s(t) ont une forme impulsionnelle de très faible reproductibilité.

Le traitement opéré par le filtre 19 sur le signal clip est illustré par la figure 7A qui représente le signal clipf. Le filtrage conduit à redistribuer l'impulsion I à intervalles réguliers sous la forme d'un signal amorti, ce qui a pour effet de décaler sa densité spectrale (TF(clipf), figure 7B) vers des fréquences plus élevées, par exemple, à partir d'une fréquence f3 supérieure à la fréquence f2.

Le bruit clipf est donc réinjecté (figure 8A) sur le signal s(t) avec retard par rapport au pic p désormais écrêté et transmis. Il en découle que, d'un point de vue fréquentiel (figure 8B), la majorité du bruit se retrouve hors de la bande de fréquences du signal utile. Ainsi, le rapport signal/bruit (S/B) de la sortie DMTout est considérablement amélioré.

On notera que si le bruit total introduit par l'invention présente, localement, une amplitude plus grande que le bruit d'écrêtage d'origine, cela n'est pas gênant dans la mesure où il se situe hors de la bande utile du signal.

On notera également que le bruit peut être redistribué vers des fréquences plus élevées et/ou plus basses, hors de la bande utile du signal, en fonction de la constitution du filtre 19 et de la bande de fréquences utile.

Un avantage de la présente invention est qu'elle permet de résoudre le problème du bruit d'écrêtage d'un signal DMT sans intervenir sur le codage ou sur les phases des symboles DMT dans lesquels des pics de forte amplitude sont présents. Ainsi, la présente invention ne nécessite aucune communication de signaux de consigne vers le récepteur qui décode tous les symboles DMT de la même manière. De plus, l'invention ne nécessite pas de retransmission d'un symbole DMT à écrêter.

Selon l'application et, en particulier, le rapport signal/bruit souhaité, on peut diminuer le seuil Aclip en gardant les mêmes performances en termes de rapport signal/bruit qui sont, elles, liées au taux d'erreur requis. Dans ce cas, on simplifie considérablement la partie analogique du système de transmission.

On peut également conserver le même seuil Aclip. Dans ce cas, le circuit de mise en forme de bruit selon la présente invention améliore considérablement les performances de traitement du signal. Le décodage des porteuses modulées est, côté réception, moins pollué par du bruit. Ainsi, l'invention diminue l'écart, dans le diagramme d'amplitudes/phases de chaque porteuse, entre un point de réception idéal et un point de réception réel. On peut ainsi, soit rendre la qualité du signal restitué meilleure, soit augmenter le nombre de points de réception sur un même diagramme d'amplitudes/phases d'une porteuse donnée, ce qui augmente la capacité (débit) du système.

Bien entendu, la présente invention est susceptible de diverses variantes et modifications qui apparaîtront à l'homme de l'art. En particulier, la réalisation pratique d'un dispositif de mise en forme de bruit selon l'invention telle qu'exposée en relation avec les figures 4 à 8 est à la portée de l'homme de l'art, que ce soit sous forme analogique ou sous forme numérique.

## Revendications

1. Procédé de mise en forme d'un signal (s(t), DMTin) en modulation multiporteuse, **caractérisé en ce qu'**il consiste :
à écrêter (11-18) le signal, en amplitude, par rapport à une valeur seuil (Aclip),
l'étape d'écrêtage incluant une étape d'extraction d'un bruit d'écrêtage (clip) ; et
à réinjecter (10), sur le signal à mettre en forme, le bruit d'écrêtage (clip) avec retard par redistribution (19), au moins en partie, hors de la bande de fréquences utile (f1-f2) du signal en modulation multiporteuse.

2. Procédé selon la revendication 1, **caractérisé en ce que** l'opération d'écrêtage (18) est effectuée sur le signal à mettre en forme (s(t)), après réinjection (10) éventuelle, sur le signal en modulation multiporteuse (DMTin), d'un bruit d'écrêtage (clipf) correspondant à un écrêtage antérieur.

3. Procédé selon la revendication 1 ou 2, **caractérisé en ce que** l'étape d'écrêtage consiste à :
détecter, dans une première réplique du signal à mettre en forme (s(t)), la présence éventuelle d'un pic (p) dont l'amplitude absolue est supérieure à la valeur seuil (Aclip) ;
soustraire (14), d'une deuxième réplique du signal à mettre en forme, la valeur seuil pour en extraire le bruit d'écrêtage (clip) correspondant à une portion du pic (p) excédant la valeur seuil (Aclip) ; et
soustraire du signal à mettre en forme, retardé d'un temps correspondant au temps nécessaire à la détection de la présence éventuelle d'un pic majoré du temps nécessaire à l'extraction du bruit d'écrêtage sur la deuxième réplique, le bruit d'écrêtage.

4. Procédé selon l'une quelconque des revendications 1 à 3, **caractérisé en ce que** l'étape de réinjection consiste à :
redistribuer le bruit d'écrêtage (clip) au moyen d'un filtre linéaire (19) ; et
ajouter le bruit (clipf) redistribué au signal en modulation multiporteuse (DMTin) à mettre en forme.

5. Procédé selon l'une quelconque des revendications 1 à 4, **caractérisé en ce que** le signal à mettre en forme est un signal numérique.

6. Procédé selon l'une quelconque des revendications 1 à 4, **caractérisé en ce que** le signal à mettre en forme est un signal analogique.

7. Dispositif de mise en forme d'un signal (DMTin, s(t)) en modulation multiporteuse, **caractérisé en ce qu'**il comporte :
un moyen (11-18) pour écrêter le signal à mettre en forme (s(t)) par rapport à une valeur seuil (Aclip), incluant un moyen (14) pour extraire un bruit d'écrêtage (clip) ;
un moyen pour redistribuer (19), hors de la bande de fréquences utile (f1-f2) du signal en modulation multiporteuse, le bruit d'écrêtage ; et
un moyen (10) pour réinjecter, sur le signal en modulation multiporteuse (DMTin), un bruit (clipf) redistribué et retardé par cette redistribution.

8. Dispositif selon la revendication 7, **caractérisé en ce que** ledit moyen de redistribution est un filtre linéaire (19).

9. Dispositif selon la revendication 7 ou 8, **caractérisé en ce qu'**il comporte un moyen (17), pour retarder le signal à mettre en forme (s(t)) préalablement à son écrêtage (18), d'une durée correspondant à la durée de propagation d'une réplique de ce signal dans un détecteur (11) de pic (p) et dans un circuit (14) d'extraction d'un bruit d'écrêtage (clip) éventuel.

## Patentansprüche

1. Verfahren zum Nachformen eines Signales (s(t), DMTin) in Mehrträgermodulation, **gekennzeichnet durch** folgende Schritte:
Beschneiden (11-18) des Signales in der Amplitude in Bezug auf einen Schwellenwert (Aclip), wobei der Beschneidungsschritt einen Extraktionsschritt eines Beschneidungsrauschens (clip) einschließt; und
erneutes Einführen (10) des Beschneidungsrauschens (clip) in das zu bearbeitende Signal mit Verzögerung **durch** Neuverteilung (19) zumindest teilweise außerhalb des Nutzfrequenzbandes (f1-f2) des Signales in Mehrträgermodulation.

2. Verfahren nach Anspruch 1, **dadurch gekennzeichnet, dass** der Beschneidungsschritt (18) auf das nachzuformende Signal (s(t)), gegebenenfalls nach erneutem Einfügen (10) eines Beschneidungsrauschens (clipf) auf das Signal in Multiträgermodulation (DMTin) entsprechend einer früheren Beschneidung ausgeführt wird.

3. Verfahren nach Anspruch 1 oder 2, **dadurch gekennzeichnet, dass** der Beschneidungsschritt besteht aus:
Detektieren, in einer ersten Wiedergabe des zu formenden Signales (s(t)), eines möglicherweise vorhandenen Peaks (p), dessen absolute Amplitude größer als der Schwellenwert (Aclip) ist;
Subtrahieren (14) des Schwellenwertes von einer zweiten Wiedergabe des zu formenden Signales, um daraus das Abschneiderauschen (clip) für den Bereich des Peaks (p), der den Schwellenwert (Aclip) überschreitet, herauszuziehen; und
Subtrahieren des Abschneiderauschens von dem zu formenden Signal, verzögert um eine Zeit, die der notwendigen Zeit für das Detektieren der möglichen Gegenwart eines Peaks entspricht, erhöht um die Zeit, die notwendig für das Extrahieren des Abschneiderauschens bei der zweiten Wiedergabe ist.

4. Verfahren nach einem der Ansprüche 1 bis 3, **dadurch gekennzeichnet, dass** der Schritt der Wiedereinführung besteht aus:
Neuverteilen des Abschneiderauschens (clip) mit Hilfe eines linearen Filters (19); und
Hinzufügen des neu verteilten Rauschens (clipf) zu dem zu formenden Signal in Mehrträgermodulation (DMTin).

5. Verfahren nach einem der Ansprüche 1 bis 4, **dadurch gekennzeichnet, dass** das zu formende Signal ein digitales Signal ist.

6. Verfahren nach einem der Ansprüche 1 bis 4, **dadurch gekennzeichnet, dass** das zu formende Signal ein analoges Signal ist.

7. Vorrichtung zum Nachformen eines Signales (DMTin, s(t)) in Mehrträgermodulation, **dadurch gekennzeichnet, dass** sie aufweist:
Eine Einrichtung (11-18), um das zu formende Signal (s(t)) in Bezug auf einen Schwellenwert (Aclip) abzuschneiden, wobei eine Einrichtung (14) eingeschlossen ist, um ein Abschneiderauschen (clip) zu extrahieren;
eine Einrichtung (19), um das Abschneiderauschen außerhalb des Nutzfrequenzbandes (f1-f2) des Signales in Mehrträgermodulation neu zu verteilen; und
eine Einrichtung (10), um in das Signal in Mehrträgermodulation (DMTin) ein neu verteiltes Rauschen (clipf) mit einer durch diese Neuverteilung bedingten Zeitverzögerung wieder einzuführen.

8. Vorrichtung nach Anspruch 7, **dadurch gekennzeichnet, dass** die Einrichtung zur Neuverteilung ein linearer Filter (19) ist.

9. Vorrichtung nach Anspruch 7 oder 8, **dadurch gekennzeichnet, dass** sie eine Einrichtung (17) aufweist, um das zu formende Signal (s(t)) vor dessen Abschneiden (18) um eine Dauer zu verzögern, die der Dauer der Laufzeit einer Wiedergabe dieses Signales in einem Peak-Detektor (11, p) und in einer Schaltung (14) zum Extrahieren eines möglichen Abschneiderauschens (clip) entspricht.

## Claims

1. A method for setup of a signal (s(t), DMTin) in multicarrier modulation, **characterized in that** it consists of:
clipping (11-18) the signal, in amplitude, with respect to a threshold value (Aclip); the clipping step including the step of extracting a clipping noise (clip); and
reinjecting (10), on the signal to be set up, the clipping noise (clip) with a delay by redistribution (19), at least partly, outside the useful bandwidth (f1-f2) of the signal in multicarrier modulation.

2. The method of claim 1, **characterized in that** the clipping step (18) is performed on the signal to be set up (s(t)), after the possible reinjection (10), on the multicarrier modulated signal (DMTin), of a clipping noise (clipf) corresponding to a former clipping.

3. The method of claim 1 or 2, **characterized in that** the clipping step consists of:
detecting, in a first replica of the signal to be set up (s(t)), the possible presence of a peak (p), the absolute amplitude of which is higher than the threshold value (Aclip);
subtracting (14), from a second replica of the signal to be set up, the threshold value, to extract therefrom the clipping noise (clip) corresponding to a portion of the peak (p) exceeding the threshold value (Aclip); and
subtracting the clipping noise from the signal to be set up, delayed by a time corresponding to the time required to detect the possible presence of a peak plus the time required to extract the clipping noise from the second replica.

4. The method of any of claims 1 to 3, **characterized in that** the reinjection step consists of:
redistributing the clipping noise (clip) by means of a linear filter (19); and
adding the redistributed noise (clipf) to the multicarrier-modulated signal (DMTin) to be set up.

5. The method of any of claims 1 to 4, **characterized in that** the signal to be set up is a digital signal.

6. The method of any of claims 1 to 4, **characterized in that** the signal to be set up is an analog signal.

7. A device for setup of a signal (DMTin, s(t)) in multicarrier modulation, **characterized in that** it includes:
means (11-18) for clipping the signal to be set up (s(t)) with respect to a threshold value (Aclip) including means (14) for extracting a clipping noise (clip);
means for redistributing (19), outside the useful bandwidth (f1-f2) of the signal in multicarrier modulation, the clipping noise; and
means (10) for reinjecting, on the signal in multicarrier modulation (DMTin), a redistributed noise (clipf), that is delayed by the redistribution.

8. The device of claim 7, **characterized in that** the redistributing means is a linear filter (19).

9. The device of claim 7 or 8, **characterized in that** it includes a means (17) for delaying the signal to be set up (s(t)) prior to its clipping (18), by a duration corresponding to the propagation time of a replica of this signal in a detector (11) of peak (p) and in a circuit (14) of extraction of a possible clipping noise (clip).
